# EUROPÄISCHE PATENTSCHRIFT

(11) **EP 0 503 485 B1**
(45) Veröffentlichungstag und Bekanntmachung des Hinweises auf die Patenterteilung: **04.01.1995**
(21) Anmeldenummer: 92103804.8
(22) Anmeldetag: 06.03.1992
(51) Int. Cl.: H04B 1/20, G06K 11/18

(54) **Fernbedienung zur drahtlosen Übermittlung von Steuerbefehlen an Video- und Fernsehgeräte**
Remote control for wireless transmission of commands to video and TV-apparatus
Dispositif de commande à distance pour transmission sans fil de commandes d'appareils video et télévision

(30) Priorität: 13.03.1991 DE 9102992 U
(43) Veröffentlichungstag der Anmeldung: 16.09.1992
(73) Patentinhaber: GRUNDIG E.M.V. Elektro-Mechanische Versuchsanstalt Max Grundig, D-90762 Fürth (DE)
(72) Erfinder: Gwiosa, Horst, Grundig E.M.V. Max Grundig, W-8510 Fuerth (DE); Schmidt, Erhard, Grundig E.M.V. Max Grundig, W-8510 Fuerth (DE)

(56) Entgegenhaltungen:
- EP-A- 0 355 172
- US-A- 4 562 347
- PATENT ABSTRACTS OF JAPAN

## Beschreibung

Die Erfindung betrifft eine Fernbedienung gemäß dem Oberbegriff des Patentanspruchs 1.

Es ist seit langem bekannt und üblich, Geräte der Unterhaltungselektronik, wie Video-Recorder und/oder Fernsehgeräte mittels vom Gerät entfernten Einrichtungen, den sogenannten Fernbedienungen zu steuern.

Dabei werden neben der Programmwahl, der Lautstärke, der Helligkeit, dem Farbkontrast usw. noch sehr viele andere Gerätefunktionen gesteuert, sei es nun im Zusammenhang mit Videotext oder anderen Funktionen wie Programmieren, Titelauswahl, Schrifteinblendung u.dgl.

Es sind Fernbedienungen bekannt, die mittels Kabel mit dem Gerät verbunden sind, und solche, die die Steuerbefehle drahtlos dem Gerät übermitteln. Die Übermittlung der Steuerbefehle an das Gerät erfolgt bei letzteren mittels Infrarot-, Ultraschall- oder anderen Übertragungstechniken. Die Fernbedienung beinhaltet dazu eine Sende-, das Gerät eine Empfangseinrichtung. Die Spannungsversorgung der Fernbedienungen erfolgt durch Einsatz von Batterien oder wiederaufladbaren Akkus.

Im Zuge der Weiterentwicklung der Unterhaltungselektronik-Geräte werden die von den Geräten ausführbaren Funktionen immer zahlreicher und vielfältiger. Dementsprechend muß nun auch zwangsläufig die Anzahl der notwendigen Funktionstasten der Fernbedienungen ansteigen. Die logische Folge davon ist eine immer größer werdende Unübersichtlichkeit der Funktionstasten und eine immer weiterschreitendere Miniaturisierung der Bedienelemente, was den Bedienkomfort keinesfalls hebt.

Übersichtlichkeit einer Bedieneinheit kann u.a. dadurch erreicht werden, daß eine Mehrzahl von Bedienfunktionen in einem Bedienungselement zusammengefaßt werden. Ein diese Forderung erfüllendes Bedienungselement ist beispielsweise eine in der Fernbedienung integrierte Steuerkugel, welche - in Drehung versetzt - über Elemente wie Walzen oder optische Abtasteinrichtungen eine von der Drehrichtung abhängige Ausführung von Bedienfunktionen ermöglicht. So können beispielsweise für eine Koordinatenansteuerung ± x/y allein vier Tasten durch eine Steuerkugel ersetzt werden. Gleiches gilt fürs Blättern, für Vor- und Rückwärtsstellen der Uhr, kontinuierliches Eingeben von Terminen, Bewegen eines Cursors und Schalten weiterer Funktionen.

Fernbedienungen mit rollbarer Steuerkugel sind bekannt und werden vor allem zum Steuern von Computern eingesetzt. Wegen der Art ihrer Bewegung über eine Fläche nach allen Richtungen rollend werden solche Fernbedienungen als "Mouse" bezeichnet.

Aus der US-A-4′562′347 ist eine Fernbedienung bekannt, bei der die Steuerkugel aus der Unter- und aus der Oberseite des Gehäuses herausragt.

Meist sind sie über Kabel mit dem Computer verbunden, doch gibt es seit geraumer Zeit auch Computer-Fernbedienungen, die die Steuerbefehle drahtlos übermitteln. Beispielsweise ist in den beiden europäischen Patentanmeldungen EP-A2-0178805 und EP-A2-0171747 eine Computer-Fernbedienung beschrieben, bei der die Kommunikation mit dem Computer drahtlos erfolgt.

Eine solche Art von Mouse ist zur Fernbedienung von Computern bestens geeignet, da an einem Computer-Arbeitsplatz in aller Regel die zum Arbeiten mit der Mouse notwendige Arbeitsfläche vorhanden ist. Anders sieht es aber bei der Fernbedienung von Video- und Fernsehgeräten aus. Dort steht in vielen Fällen die benötigte Rollfäche nicht zur Verfügung. Die Fernbedienung muß aus der Hand bedienbar sein, d.h. die Steuerkugel muß nach oben aus dem Gehäuse der Fernbedienung herausragen und von Hand betätigbar sein.

Auch hierfür sind aus der Computer-Technik Beispiele bekannt. Dort werden Fernbedienungen mit nach oben aus dem Gehäuse herausragenden Steuerkugeln eingesetzt, die allgemein als "Track-Ball" bezeichnet werden. Dabei kann der Track-Ball Bestandteil des Computergehäuses oder der Fernbedienung sein.

Ein Track-Ball der letzteren Art ist aus EP-A1-0265534 bekannt. Die an der Bedienseite der Fernbedienung herausragende Steuerkugel kann durch die Finger der Bedienperson bewegt werden.

Aufgabe der Erfindung ist es, ausgehend von der vielfältigen Verwendungsart einer Fernbedienung für Video- und Fernsehgeräte eine Fernbedienung mit einer Steuerkugel zu schaffen, die sowohl auf einer ebenen Unterlage rollend als auch durch Drehen der Steuerkugel von Hand betätigbar ist.

Das bedingt eine Fernbedienung, bei der die Steuerkugel sowohl aus der Unter- als auch aus der Oberseite des Fernbedienungsgehäuses ragt. Bei Handbetätigung der Steuerkugel kann die Fernbedienung entweder in der Hand gehalten oder auf einer Ablage abgelegt sein. Für diesen Fall darf die Steuerkugel - soll sie von oben mit den Fingern leicht beweglich sein - nicht auf der Unterlage aufliegen, da sie sonst an ihrer freien Beweglichkeit gehindert ist, wodurch es möglich ist, trotz steigender Zahl möglicher Gerätefunktionen, den Bedienungskomfort der Fernbedienungen zu verbessern.

Die gestellte Aufgabe wird durch eine Fernbedienung mit den Merkmalen des Patentanspruchs 1 gelöst.

Die Erfindung wird nun anhand der Zeichnungen näher erläutert: Es zeigen:
- Fig. 1: eine Fernbedienung in einer Lage, in der eine Betägigung der Steuerkugel von Hand möglich ist,
- Fig. 2: dieselbe Fernbedienung wie in Fig. 1, jedoch mit auf einer Unterlage aufliegender Steuerkugel,
- Fig. 3: die alternative Ausführungsform einer Fernbedienung und
- Fig. 4: die Fernbedienung nach Fig. 3 für den Fall, daß die Steuerkugel aufliegt.

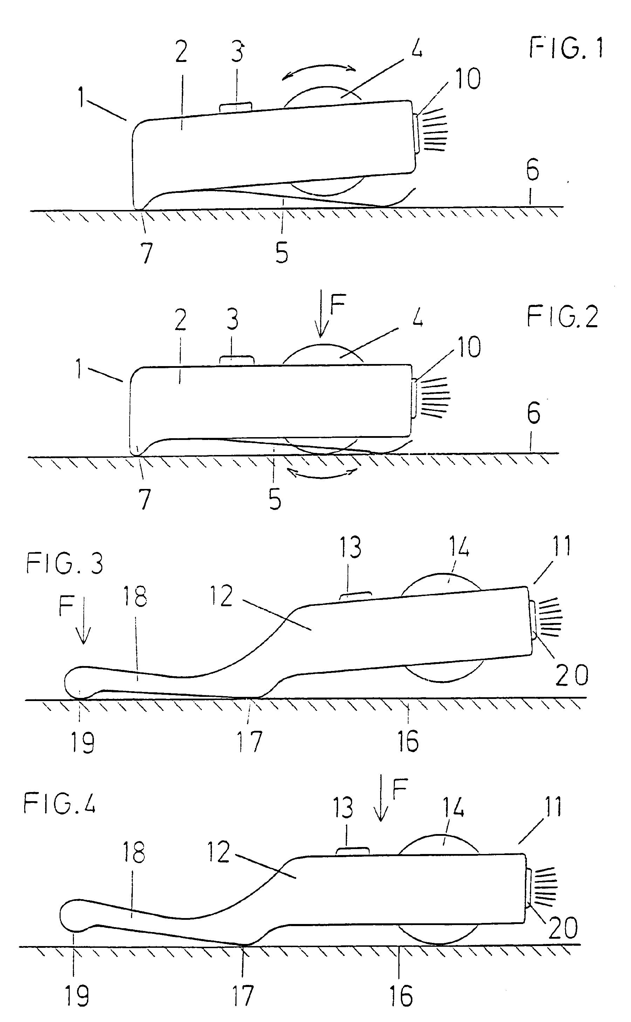

Die Fernbedienung 1 aus Fig. 1 besteht aus einem Gehäuse 2 mit integrierter Funktionstaste 3 und Steuerkugel 4. Die Steuersignale werden drahtlos mittels Infrarot, Ultraschall oder anderen Übertragungstechniken an das Video- oder Fernsehgerät übermittelt. Dazu ist in der Fernbedienung eine Sendeeinrichtung 10 eingebaut. An der Unterseite des Gehäuses 2 ist mindestens ein federnder Gleitschuh 5 befestigt. Die Federkraft des Gleitschuhs 5 ist dabei so bemessen, daß der die Steuerkugel 4 beinhaltende Teil der Fernbedienung, welche mit Wippe 7 auf der Unterlage 6 aufliegt, so weit von der Unterlage 6 abgehoben wird, daß die Steuerkugel 4 auch bei leichtem Druck von der Oberseite her nicht auf der Auflage 6 aufliegt. Sie kann also, entsprechend der zu steuernden Funktion, von der Bedienperson mit den Fingern nach allen Richtungen frei gedreht werden. Die Funktionstasten 3 sind von der gleichen Seite aus ebenfalls betätigbar.

Bei dem in Fig. 2 dargestellten Fall ist (dieselbe Fernbedienung wie in Fig. 1) die von oben einwirkende Kraft F derart, daß die Federkraft des Gleitschuhs 5 überwunden wird und die Steuerkugel 4 auf der Auflagefläche 6 aufliegt. Die Kraft F wird von der Hand der Bedienperson aufgebracht. Die Fernbedienung kann nun als "Mouse" über die Auflagefläche 6 bewegt werden, die Steuerkugel "rollt" entsprechend der Schiebebewegung.

Die Fig. 3 und 4 zeigen die alternative Ausführungsform einer Fernbedienung 11, bei der die gleiche Arbeitsweise wie bei der in den Fig. 1 und 2 geschilderten Ausführung möglich ist. Hier wird die Steuerkugel 14 jedoch nicht durch einen federnden Gleitschuh von der Auflage 16 abgehoben, sondern durch eine Kraft F auf den in der Längsrichtung des Gehäuses 12 herausragenden Teil 18. Die Fernbedienung 11 kippt dadurch um den Auflagepunkt 17 und hebt die Steuerkugel von der Auflage 16 ab. Der Druck F wird zum Beispiel durch die auf der Verlängerung 18 aufliegende Hand der Bedienperson erzeugt.

## Patentansprüche

1. Fernbedienung (1,11) zur drahtlosen Übermittlung von Steuerbefehlen an Video- und/oder Fernsehgeräte, bestehend aus
- einem Gehäuse (2,12),
- einer drehbaren Steuerkugel (4,14),
- mindestens einer Befehlstaste (3,13) und
- einer Sende-Einrichtung (10,20) für die Übertragung der Steuerbefehle von der Fernbedienung zum Video- oder Fernsehgerät, **gekennzeichnet**
durch die Kombination nachfolgender Merkmale:
- Die Steuerkugel (4) ragt aus der Unter- und Oberseite des Gehäuses (2) heraus,
und dass entweder
- an der Gehäuse-Unterseite mindestens ein federnder Gleitschuh (5) angebracht ist, der im von oben her unbelasteten Zustand des Gehäuses (2) dieses um einen Auflagepunkt (7) so weit von einer Auflagefläche (6) wegschwenkt, daß die Steuerkugel (4) die Auflagefläche (6) nicht mehr berührt, oder
- daß das Gehäuse (12) mit einer Verlängerung (18) in seiner Längsrichtung derart versehen ist, daß zwei Auflagepunkte (17,19) vorhanden sind und daß die Steuerkugel (14) durch eine Kraft F auf diese Verlängerung (18) über den Auflagepunkt (17) von der Auflagefläche (16) abhebbar ist.

## Claims

1. Remote control unit (1, 11) for the wireless transmission of control commands to video and/or television sets, comprising
- a housing (2, 12),
- a rotatable track ball (4, 14),
- at least one command key (3, 13) and
- a transmitting device (10, 20) for the transmission of control commands from the remote control unit to the video or television set, **characterised by** a combination of the following features:
- the track ball (4) protrudes out of the bottom and top sides of the housing (2), and that either
- at least one spring-loaded shoe (5) is positioned at the underside of the housing and in the condition of the housing (2) where it is not loaded from above, this housing is tilted away from a supporting surface (6) such that the track ball (4) no longer makes contact with the supporting surface (6), or
- the housing (12) is provided with an extension (18) in its longitudinal direction such that two support points (17, 19) are available, and that the track ball (14) can be raised from the supporting surface (16) via the support point (17) by a force F applied to this extension (18).

## Revendications

1. Appareil de commande à distance (1,11) pour transmission sans fil de commandes d'appareils vidéo et de télévision, composé
- d'un boîtier (2,12);
- d'une boule de commande pouvant tourner (4, 14);
- d'au moins une touche de commande (3, 13) et
- d'un dispositif d'émission (10, 20) pour la transmission des commandes de l'appareil de commande à distance à l'appareil vidéo ou à la télévision, caractérisé en ce qu'il combine les caractéristiques suivantes:
- la boule de commande (4) fait saillie hors des faces inférieure et supérieure du boîtier (2), et que
- soit au moins un socle de glissement souple (5) est fixé à la face inférieure du boîtier , lequel fait pivoter le boîtier (2), lorsque celui-ci n'est pas chargé du haut vers le bas, autour d'un point d'appui (7) d'une distance telle de la surface d'appui (6) que la boule de commande (4) ne touche plus la surface d'appui (6),
- soit le boîtier (12) est pourvu d'un prolongement (18) dans la direction de sa longueur de telle manière que deux points d'appui (17, 19) existent et que la boule de commande (14) peut être soulevée au-dessus du point d'appui (17) de la surface d'appui (16) par l'application d'une force F sur ce prolongement (18).
